# FASCICULE DE BREVET EUROPEEN

(11) **EP 1 563 195 B1**
(45) Date de publication et mention de la délivrance du brevet: **16.01.2008**
(21) Numéro de dépôt: 03782569.2
(22) Date de dépôt: 14.11.2003
(51) Int. Cl.: F16C 1/06

(54) **DISPOSITIF DE TRANSMISSION D UN MOUVEMENT DE ROTATION COMPRENANT DES ZONES FORMANT PALIER**
VORRICHTUNG ZUR ÜBERTRAGUNG EINER DREHBEWEGUNG MIT STUFENFÖRMIGEN ZONEN
ROTATION TRANSMISSION DEVICE COMPRISING BEARING-FORMING ZONES

(30) Priorité: 18.11.2002 FR 0214418
(43) Date de publication de la demande: 17.08.2005
(73) Titulaire: Inderflex-Technoflex, 77820 Le Châtelet en Brie (FR)
(72) Inventeur: TORES, Denis, F-77530 Vaux le Penil (FR)
(74) Mandataire: Derambure, Christian
(86) Numéro de dépôt international: PCT/FR2003/003395
(87) Numéro de publication internationale: WO 2004/046570

(56) Documents cités:
- WO-A-92/08061
- DE-U- 20 014 561
- US-A- 4 915 340
- US-A- 5 931 736
- PATENT ABSTRACTS OF JAPAN vol. 1996, no. 03, 29 mars 1996 (1996-03-29) & JP 07 310730 A (YAZAKI CORP), 28 novembre 1995 (1995-11-28) cité dans la demande

## Description

L'invention concerne un dispositif de transmission d'un mouvement de rotation et un système de réglage pour siège de véhicule automobile comprenant un tel dispositif.

On connaît des dispositifs de transmission de rotation qui comprennent un arbre flexible et une gaine à l'intérieure de laquelle est logé l'arbre.

Dans ces dispositifs de transmission, notamment pour le réglage de siège pour véhicule automobile, les vitesses de rotation de l'arbre dans la gaine sont supérieures à 2000 tours/minute, classiquement de l'ordre de 3000 tours/minute.

Pour permettre une rotation à de telles vitesses, un jeu de quelques dixièmes de millimètre est nécessaire entre l'arbre et la gaine. Mais ce jeu entraîne, lors de la rotation, l'apparition de vibrations de faible amplitude qui se propagent le long de l'arbre et provoquent un bruit et une sensation au toucher désagréables.

Pour résoudre ce problème de vibrations, le document JP 07 310 730 propose un dispositif de transmission de rotation dont la gaine présente au moins une déformation sous la forme d'un étranglement, c'est à dire d'une réduction locale du diamètre de la gaine. En effet, cet étranglement, en provoquant un contact serrant entre l'arbre et la gaine, permet de limiter les vibrations. Cependant, ce contact crée des frottements importants entre l'arbre et la gaine, ce qui oblige à augmenter le couple du moteur pour obtenir une vitesse de rotation de l'arbre suffisante pour l'application envisagée. De plus, ces frottements entraînent une usure prématurée de la gaine au niveau de la déformation.

L'invention vise à palier ces inconvénients en proposant un dispositif de transmission d'un mouvement de rotation dont la gaine présente des déformations permanentes qui sont agencées pour limiter les vibrations sans réduire le diamètre intérieur de la gaine.

A cet effet et selon un premier aspect, l'invention concerne un dispositif de transmission d'un mouvement de rotation, ce dispositif comprenant un arbre flexible et une gaine à l'intérieur de laquelle l'arbre est logé, la gaine comprenant une âme formée d'un cylindre creux dont le diamètre intérieur est agencé pour permettre la rotation dudit arbre à l'intérieur de ladite gaine. L'âme de la gaine comprend au moins une zone formant palier qui est obtenue par déformation plastique de l'âme, cette zone comprend au moins trois parties, deux parties extérieures et une partie centrale. Ces parties présentent des axes sensiblement parallèles à celui de l'âme et sont de diamètre sensiblement égal à celui de l'âme, les parties extérieures étant sensiblement coaxiales et d'axe décalé par rapport aux axes de la partie centrale et de l'âme.

Selon une réalisation, la partie centrale de la zone formant palier et l'âme de la gaine sont sensiblement coaxiales.

Selon une réalisation, la gaine comprend plusieurs zones formant palier espacées les unes des autres d'une distance comprise entre 5 et 15 centimètres. Selon une autre réalisation, les zones sont disposées continûment le long de la gaine.

Selon une réalisation, l'âme de la gaine est munie sur sa surface intérieure d'un flocage.

Selon un deuxième aspect, l'invention concerne un système de réglage pour siège de véhicule automobile, comprenant au moins une glissière de réglage montée sur la structure du véhicule et des moyens réglables de fixation du siège sur la glissière, le système comprenant en outre un moteur d'entraînement disposant d'au moins une sortie tournante. Le système comprend en outre un dispositif de transmission d'un mouvement de rotation du type décrit ci-dessus qui est disposé entre la sortie dudit moteur d'entraînement et lesdits moyens de fixation, de sorte à déplacer les moyens de fixation le long de la glissière de réglage en réponse à une rotation de la sortie.

L'invention sera bien comprise à la lecture de la description qui suit, faite en référence aux figures annexées.

La figure 1 est une vue partielle en coupe longitudinale d'un dispositif de transmission de rotation, montrant une zone formant palier selon un mode de réalisation de l'invention.

La figure 2 est une vue partielle en coupe longitudinale d'un dispositif de transmission de rotation, montrant une zone formant palier selon un deuxième mode de réalisation de l'invention.

La figure 3 est une vue en perspective d'un système de réglage pour le siège de véhicule automobile selon l'invention.

Un dispositif de transmission d'un mouvement de rotation 1 comprend un arbre flexible 2 et une gaine 3. L'arbre 2 est logé dans la gaine 3 dont le diamètre intérieur est prévu pour permettre la rotation de l'arbre 2 dans la gaine 3.

Les vitesses de rotation de l'arbre 2 sont classiquement d'environ 3000 tours/minute. Pour permettre une rotation à cette vitesse, un jeu de quelques dixièmes de millimètre est prévu entre l'arbre 2 et la gaine 3.

La gaine 3 comprend une âme 4 et une enveloppe tubulaire extérieure 5 enrobant l'âme 4. L'âme 4 peut par exemple être formée d'un ressort hélicoïdal en matériau métallique. Ce ressort est par exemple formé à partir d'une bande métallique enroulée en hélice. Les spires du ressort sont non-jointive ce qui confère une flexibilité à la gaine. L'enveloppe extérieure 5 peut être réalisée en une matière plastique extrudée.

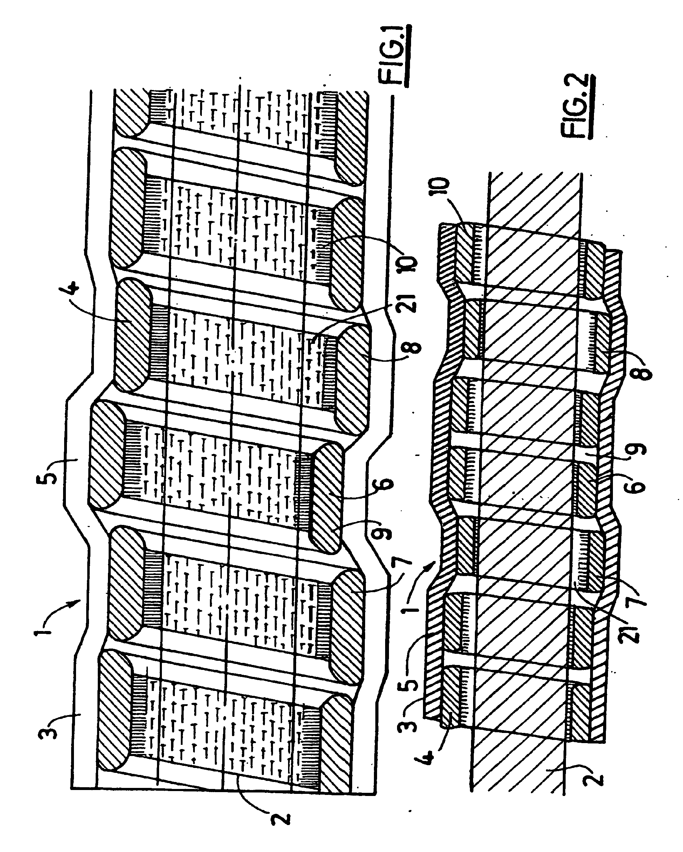

En se référant aux figures 1 et 2, la gaine 3 présente une déformation permanente sous la forme d'une zone formant palier 6, le palier s'étendant dans la direction longitudinale du dispositif.

La zone formant palier comprend trois parties, deux parties extérieures 7 et 8, et une partie centrale 9. L'axe de chacune de ces parties est sensiblement parallèle à celui de l'âme 4. Les parties extérieures 7 et 8 sont en outre coaxiales et leur axe est décalé par rapport à celui de l'âme 4. Dans la description, les axes sont définis dans la position rectiligne stable de la gaine, tel que représenté sur les figures 1 et 2.

Chaque partie 7-9 présente de plus un diamètre intérieur sensiblement égal au diamètre intérieur de l'âme 4 et comprend un nombre entier de spires consécutives.

Selon le mode de réalisation de l'invention représenté sur la figure 1, la zone formant palier 6 du dispositif de transmission 1 comprend deux parties extérieures 7, 8 et une partie centrale 9 formées d'une seule spire. Les axes de chaque partie sont décalés par rapport à l'axe de l'âme 4 de telle sorte que l'axe commun des parties extérieures 7, 8 et l'axe de la partie centrale 9 sont sensiblement symétriques par rapport à l'axe de l'âme 4.

Selon le mode de réalisation de l'invention représenté sur la figure 2, la zone formant palier. 6 du dispositif de transmission 1 comprend deux parties extérieures 7, 8 formées d'une seule spire et une partie centrale 9 formée de deux spires. La partie centrale 9 est en outre coaxiale avec l'âme 4 de la gaine.

Selon l'invention, plusieurs zones formant palier peuvent être réparties le long de la gaine. Dans une réalisation, la distance séparant deux zones est typiquement comprise entre 5 et 15 centimètres. Selon une autre réalisation, les zones sont disposées continûment le long de la gaine.

La zone formant palier 6 entraîne un désaxage des spires métalliques de la gaine 3 sans diminution du diamètre intérieur desdites spires. Ceci crée un cheminement légèrement sinueux à l'intérieur de la gaine 3 avec des points de contact entre la gaine 3 et l'arbre 2 qui sont opposés par rapport à l'axe de la gaine et alternés de part et d'autre de cet axe. Ces points de contact éliminent toute possibilité de mise en vibration de l'arbre en mouvement sans pour autant freiner celui-ci. Le couple du moteur peut ainsi être analogue à celui utilisé avec des gaines non déformées et la gaine ne présente pas une tendance à l'usure prématurée au niveau des déformations. D'autre part, les espaces laissés libres entre la gaine 3 et l'arbre flexible 2 peuvent former réserve de graisse 21 pour la lubrification de l'arbre 2.

Les déformations de la gaine 3 sont réalisées par déformation plastique de la gaine, par exemple à l'aide d'une presse dont les mors sont agencés pour décaler radialement les spires. Ces déformations sont donc permanentes et le montage du dispositif ne nécessite aucune pièce supplémentaire de maintien de ces déformations.

En se référant aux figures 1 et 2 et suivant un mode de réalisation particulier de l'invention, l'âme 4 de la gaine 3 comprend un flocage 10 sur sa surface intérieure, c'est à dire la surface en regard de l'arbre 2.

En effet, on a pu observer qu'un tel agencement dans lequel la gaine est floquée intérieurement présentait un amortissement sonore optimal. Le flocage permet d'assurer un isolement mécanique entre l'arbre et la gaine. Le fait de former ce flocage sur la gaine, en combinaison avec les déformations 6, donne de bons résultats du point de vue acoustique.

La surface intérieure de l'âme 4 est revêtue par tout procédé connu, par exemple par voie électrostatique, d'un flocage 10 qui peut comprendre des fibres polyamides 6.6.

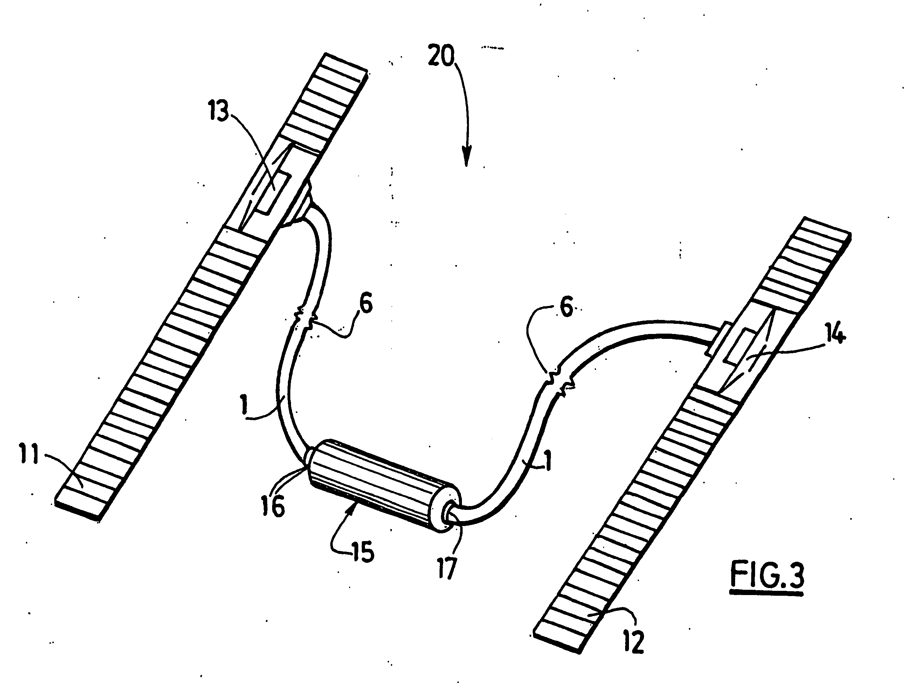

Un tel dispositif de transmission de mouvement de rotation peut être utilisé dans un système de réglage de siège automobile 20 tel que représenté à la figure 3.

A cet effet, deux glissières 11 et 12 sont fixées par tout moyens convenables sur la structure non représentée d'un véhicule automobile. Ces glissières présentent des crans de réglage dont la fonction sera décrite ci-après.

Les glissières 11 et 12 supportent l'armature d'un siège, également non représentée, du véhicule, dont le déplacement et la fixation par rapport aux glissières sont assurés par des réducteurs 13 et 14 respectivement munis de roues dentées coopérant avec les crans précités des glissières 11 et 12.

Un moteur électrique 15 est fixé à la structure du véhicule ou, en variante, à l'armature du siège. Ce moteur 15 possède deux sorties tournantes 16 et 17. Ces sorties 16 et 17 sont reliées par des dispositifs de transmission d'un mouvement de rotation 1 selon l'invention aux réducteurs 13 et 14 respectivement.

Les zones formant palier des dispositifs de transmission 1 sont prévues à des emplacements de la gaine qui sont sensiblement rectilignes lors du montage dans le système de réglage 20. En effet, il a été constaté que c'est à de tels emplacement que les vibrations se produisent et se propagent de façon la plus importante.

Lorsque le moteur 15 est alimenté, il entraîne les arbres des dispositifs de transmission 1 en rotation à l'intérieur de leurs gaines. Ces arbres entraînent à leur tour les réducteurs 13 et 14 ce qui a pour effet de déplacer le siège le long des glissières 11 et 12.

## Revendications

1. Dispositif de transmission d'un mouvement de rotation (1) comprenant un arbre flexible (2) et une gaine (3) à l'intérieur de laquelle l'arbre (2) est logé, ladite gaine (3) comprenant une âme (4) formée d'un cylindre creux dont le diamètre intérieur est agencé pour permettre la rotation dudit arbre (2) à l'intérieur de ladite âme (4), ledit dispositif (1) étant **caractérisé en ce que** l'âme (4) comprend au moins une zone formant palier (6) qui est obtenue par déformation plastique, ladite zone (6) comprenant au moins trois parties, deux parties extérieures (7, 8) et une partie centrale (9), lesdites parties présentant des axes sensiblement parallèles à celui de l'âme (4) et étant de diamètre sensiblement égal à celui de l'âme, les parties extérieures (7, 8) étant sensiblement coaxiales et d'axe décalé par rapport aux axes de la partie centrale (9) et de l'âme (4).

2. Dispositif de transmission (1) selon la revendication 1, **caractérisé en ce que** la partie centrale (9) de la zone formant palier (6) et l'âme (4) de la gaine (3) sont sensiblement coaxiales.

3. Dispositif- de transmission (1) selon la revendication 1 ou 2; **caractérisé en ce que** l'âme (4) de la gaine (3) est formée d'un ressort hélicoïdal en matériau métallique.

4. Dispositif de transmission (1) selon la revendication 3, **caractérisé en ce que** chaque partie (7, 8, 9) de la zone formant palier (6) comprend un nombre entier de spires du ressort hélicoïdal.

5. Dispositif de transmission (1) selon l'une des revendications 3 ou 4,
**caractérisé en ce que** les spires de chaque partie (7, 8, 9) de la zone formant palier (6) sont consécutives.

6. Dispositif de transmission (1) selon l'une des revendications 3 à 5, **caractérisé en ce que** les parties extérieures (7, 8) de la zone formant palier (6) comprennent chacune une spire et **en ce que** la partie centrale (9) comprend deux spires.

7. Dispositif de transmission (1) selon l'une quelconque des revendications 1 à 6, **caractérisé en ce que** la gaine (3) comprend plusieurs zones formant palier (6), lesdites zones étant espacées les unes des autres d'une distance comprise entre 5 et 10 centimètres.

8. Dispositif de transmission (1) selon l'une quelconque des revendications 1 à 6, **caractérisé en ce que** la gaine (3) comprend plusieurs zones formant palier (6), lesdites zones étant disposées continûment le long de la gaine.

9. Dispositif de transmission (1) selon l'une quelconque des revendications 1 à 8, **caractérisé en ce que** la gaine (3) dudit dispositif (1) comprend en outre une enveloppe tubulaire extérieure (5) en matière plastique qui enrobe l'âme (4).

10. Dispositif de transmission (1) selon l'une quelconque des revendications 1 à 9, **caractérisé en ce que** l'âme (4) est munie sur sa surface intérieure d'un flocage (10).

11. Dispositif de transmission (1) selon la revendication 10 lorsqu'elle dépend de la revendication 3, **caractérisé en ce que** le ressort hélicoïdal est formé à partir d'une bande métallique enroulée en hélice non jointive, la face intérieure de ladite bande métallique faisant face à l'axe de ladite gaine étant munie dudit flocage (10).

12. Dispositif de transmission (1) selon la revendication 10 ou 11, **caractérisé en ce que** le flocage (10) comprend des fibres formées en polyamides 6.6.

13. Système de réglage pour siège de véhicule automobile (20), comprenant au moins une glissière de réglage (11, 12) montée sur la structure du véhicule et des moyens réglables (13, 14) de fixation du siège sur ladite glissière (11, 12), ledit système comprenant en outre un moteur d'entraînement (15) disposant d'au moins une sortie tournante (16, 17), ledit système de réglage (20) étant **caractérisé en ce qu'**il comprend en outre un dispositif de transmission (1) selon l'une quelconque des revendications 1 à 12, qui est disposé entre la sortie (16, 17) dudit moteur d'entraînement (15) et lesdits moyens de fixation (13, 14), de sorte à déplacer lesdits moyens de fixation (13, 14) le long de ladite glissière de réglage (11, 12) en réponse à une rotation de ladite sortie (16. 17).

14. Système de réglage (20) selon la revendication 13, **caractérisé en ce que** les zones formant palier (6) sont prévues à des emplacements de la gaine (3) qui sont sensiblement rectilignes.

## Claims

1. A device for the transmission of a rotation motion (1) comprising a flexible shaft (2) and a sheath (3) inside which the shaft (2) is accommodated, said sheath (3) comprising a core (4) composed of a hollow cylinder, the internal diameter of which is so arranged as to allow the rotation of said shaft (2) inside said core (4), said device (1) being **characterized in that** the core (4) comprises at least one level section-forming area (6) which is obtained by elastic deformation, said area (6) comprising at least three portions, two outer portions (7,8) and a central portion (9), said portions having axes substantially parallel to that of the core (4) and having diameters substantially equal to that of the core (4), the outer portions (7,8) being substantially co-axial and having an axis shifted with respect to the axes of the central portion (9) and the core (4).

2. A transmission device (1) according to claim 1, **characterized in that** the central portion (9) of the level section-forming area (6) and the core (4) of the sheath (3) are substantially co-axial.

3. A transmission device (1) according to claims 1 or 2, **characterized in that** the core (4) of the sheath (3) is formed from a coil spring made of a metallic material.

4. A transmission device (1) according to claim 3, **characterized in that** each portion (7,8,9) of the level section-forming area (6) comprises an integer number of turns of the coil spring.

5. A transmission device (1) according to one of claims 3 or 4, **characterized in that** the turns of each portion (7,8,9) of the level section-forming area (6) are contiguous.

6. A transmission device (1) according to one of claims 3 to 5, **characterized in that** the outer portions (7,8) of the level section-forming areas (6) each comprise a turn and **in that** the central portion (9) comprises two turns.

7. A transmission device (1) according to any one of claims 1 to 6, **characterized in that** the sheath (3) comprises several level sections-forming areas (6), said areas being spaced from each other by a distance from 5 to 10 centimeters.

8. A transmission device (1) according to any one of claims 1 to 6, **characterized in that** the sheath (3) comprises several level sections-forming areas (6), said areas being positioned continuously along the sheath (3).

9. A transmission device (1) according to any one of claims 1 to 8, **characterized in that** the sheath (3) of said device (1) further comprises an outer tubular jacket (5) made of plastic material coating the core (4).

10. A transmission device (1) according to any one of claims 1 to 9, **characterized in that** the core (4) is provided on its inner surface with a flocking (10).

11. A transmission device (1) according to claim 10 when dependent on claim 3, **characterized in that** the coil spring is formed from a metal strip coiled into an unlinked helix, the inner face of said metal strip facing the axis of said sheath being provided with said flocking (10).

12. A transmission device (1) according to claim 10 or 11, **characterized in that** the flocking (10) comprises fibers made of polyamides 6.6.

13. A system (20) for adjusting the seat of a motor vehicle comprising at least an adjusting slide (11,12) mounted on the vehicle structure and adjustable fixing means (13,14) for fixing said seat on said slide (11,12), said system further comprising a driving motor (15) having at least one rotating outlet (16,17), said adjusting system (20) being **characterized in that** it further comprises a transmission device (1) according to any one of claims 1 to 12, which is positioned between the outlet (16,17) of said driving motor (15) and said fixing means (13, 14), so as to move said fixing means (13, 14) along said adjusting slide (11,12), in response to a rotation of said outlet (16,17).

14. An adjusting system (20) according to claim 13, **characterized in that** the level sections-forming areas (6) are provided at locations on the sheath (3) which are substantially rectilinear.

## Patentansprüche

1. Vorrichtung für die Übertragung einer Drehbewegung (1), die eine flexible Welle (2) und eine Ummantelung (3) umfaßt, in deren Innern die Welle untergebracht ist, wobei die besagte Ummantelung (3) einen aus einem Hohlzylinder gebildeten Kern (4) umfaßt, dessen Innendurchmesser so gestaltet ist, daß die Drehung der besagten Welle (2) im Innern des besagten Kerns (4) möglich ist, wobei die besagte Vorrichtung (1) **dadurch gekennzeichnet ist, daß** der Kern (4) zumindest eine Zone umfaßt, die ein Lager (6) bildet, das durch plastische Verformung erzielt wird, wobei die besagte Zone (6) mindestens drei Teile umfaßt, zwei äußere Teile (7, 8) und einen zentralen Teil (9), wobei die besagten Teile deutlich zu derjenigen des Kerns (4) parallele Achsen aufweisen und einen Durchmesser deutlich gleich demjenigen des Kerns haben, wobei die äußeren Teile (7, 8) deutlich koaxial sind und eine gegenüber den Achsen des zentralen Teils (9) und des Kerns (4) versetzte Achse haben.

2. Vorrichtung für die Übertragung (1) nach Anspruch 1, **dadurch gekennzeichnet, daß** der zentrale Teil (9) der Zone, die ein Lager (6) bildet, und der Kern (4) der Ummantelung (3) deutlich koaxial sind.

3. Vorrichtung für die Übertragung (1) nach Anspruch 1 oder 2, **dadurch gekennzeichnet, daß** der Kern (4) der Ummantelung (3) aus einer Schraubenfeder aus Metall gebildet wird.

4. Vorrichtung für die Übertragung (1) nach Anspruch 3, **dadurch gekennzeichnet, daß** jeder Teil (7, 8, 9) der ein Lager bildenden Zone (6) eine ganze Zahl Windungen der Schraubenfeder umfaßt.

5. Vorrichtung für die Übertragung (1) nach einem beliebigen der vorstehenden Ansprüche 3 oder 4, **dadurch gekennzeichnet, daß** die Windungen jedes Teils (7, 8, 9) der ein Lager bildenden Zone (6) hintereinander liegen.

6. Vorrichtung für die Übertragung (1) nach einem der vorstehenden Ansprüche 3 bis 5, **dadurch gekennzeichnet, daß** die äußeren Teile (7, 8) der ein Lager bildenden Zone (6) jeweils eine Windung umfassen, und daß der zentrale Teil (9) zwei Windungen umfaßt.

7. Vorrichtung für die Übertragung (1) nach einem beliebigen der vorstehenden Ansprüche 1 bis 6, **dadurch gekennzeichnet, daß** die Ummantelung (3) mehrere ein Lager (6) bildende Zonen umfaßt, wobei die besagten Zonen durch einen Abstand von zwischen 5 und 10 Zentimeter voneinander entfernt sind.

8. Vorrichtung für die Übertragung (1) nach einem beliebigen der vorstehenden Ansprüche 1 bis 6, **dadurch gekennzeichnet, daß** die Ummantelung (3) mehrere ein Lager (6) bildende Zonen umfaßt, wobei die besagten Zonen der Ummantelung entlang kontinuierlich angeordnet sind.

9. Vorrichtung für die Übertragung (1) nach einem beliebigen der vorstehenden Ansprüche 1 bis 8, **dadurch gekennzeichnet, daß** die Ummantelung (3) der besagten Vorrichtung (1) ferner eine äußere röhrenförmige Hülse (5) aus Kunststoff umfaßt, die den Kern (4) umgibt.

10. Vorrichtung für die Übertragung (1) nach einem beliebigen der vorstehenden Ansprüche 1 bis 9, **dadurch gekennzeichnet, daß** der Kern (4) auf seiner Innenseite mit einer Beflockung (10) versehen ist.

11. Vorrichtung für die Übertragung (1) nach Anspruch 10, wenn er vom Anspruch 3 abhängt, **dadurch gekennzeichnet, daß** die Schraubenfeder ausgehend von einem Metallband gebildet wird, das in einer losen Schraube aufgerollt ist, wobei die Innenfläche des besagten Metallbands der Achse der besagten Ummantelung gegenüber steht, die mit der besagten Beflockung (10) versehen ist.

12. Vorrichtung für die Übertragung (1) nach Anspruch 10 oder 11, **dadurch gekennzeichnet, daß** die Beflockung (10) aus Polyamid 6.6 gebildete Fasern umfaßt.

13. Regelsystem für den Sitz eines Kraftfahrzeugs (10), das zumindest eine Regelgleitschiene (11, 12) umfaßt, die auf der Fahrzeugstruktur montiert ist, und regelbare Mittel (13, 14) der Befestigung des Sitzes auf der besagten Gleitschiene (11, 12) wobei des besagte System außerdem ein Antriebmotor (15) mit zumindest einer drehungenden Ausgang (16,17) umfasst, wobei das besagte Regelsystem (20) **dadurch gekennzeichnet ist, daß** es ferner eine Vorrichtung für die Übertragung (1) nach einem beliebigen der vorstehenden Ansprüche 1 bis 12 umfaßt, daß es zwischen dem Ausgang (16, 17) des besagten Antriebsmotors (15) und den besagten Befestigungsmitteln (13, 14) angeordnet ist, so daß die besagten Befestigungsmittel (13, 14) in Reaktion auf eine Drehung des besagten Ausgangs (16, 17) entlang der besagten Regelgleitschiene (11, 12) verschoben werden.

14. Regelsystem (20) nach Anspruch 13, **dadurch gekennzeichnet, daß** die ein Lager bildenden Zonen (6) an Orten der Ummantelung (3) vorgesehen sind, die deutlich geradlinig sind.
